# EUROPEAN PATENT APPLICATION

(11) **EP 4 024 319 A1**
(43) Date of publication of application: **06.07.2022**
(21) Application number: 20857696.7
(22) Date of filing: 21.08.2020
(51) Int. Cl.: G06Q 50/10, G06Q 50/26, G06F 13/00

(54) **RESEARCH INFORMATION MANAGEMENT SYSTEM**

(30) Priority: 26.08.2019 JP 2019154109
(71) Applicant: Chemiteras, Inc., Yokohama-shi, Kanagawa 222-0033 (JP)
(72) Inventor: KABURAGI, Atsumi, Yokohama-shi, Kanagawa 222-0033 (JP); KARITA, Takahisa, Yokohama-shi, Kanagawa 222-0033 (JP); TERADA, Tokinori, Yokohama-shi, Kanagawa 222-0033 (JP)
(74) Representative: Becker Kurig & Partner Patentanwälte mbB
(86) International application number: PCT/JP2020/031714
(87) International publication number: WO 2021/039667

(57) **Abstract**

To provide a research information management system that contributes to support activities for researchers such that research results of the researchers all over the world are fairly evaluated and an incentive can be received.

The present invention is that a first terminal of a researcher, a second terminal of a research supporter, and a third terminal of a general participant access a server of a platform having the server and a database through a network. The platform comprises a dashboard tool analyzing and processing research information data to be submitted from the first terminal and storing the data in the database as first data; an expert live tool lively distributing a video to be distributed from the first terminal, to the third terminal as a distribution video, and storing in the database as second data, evaluation points transmitted through the third terminal as an evaluation of the distribution video; a credit rating tool scoring and displaying a credit rating of the researcher using Artificial Intelligence based on the first data, the second data, and third data transmitted from the second terminal as research credit information of the researcher and stored in the database.

## Description

### Detailed Description of the Invention

### Technical Field

The present invention relates to a research information management system, in particular to a research information management system that contributes to support activities for researchers.

### Background Art

There are huge gaps in treatment that researchers conducting research activities receive, depending on countries or institutions to which they belong. For example, in comparing postdoctoral researcher's annual salaries between developed countries and developing countries, those in the developed countries reach a certain level, e.g., 40,000 dollars to 100, 000 dollars, while those in some developing countries are only about 240 dollars, and thus huge gaps exist.

In addition, in order for a researcher to achieve excellent research results, support from a research supporter such as a company, university, or foundation, is important along with the researcher's own efforts. Support such as an offer of joint research, provision of funds for research and development from the research supporter, or conclusion of an employment contract, greatly benefits researchers in disadvantaged circumstances.

Usually, in order for a researcher to get approval of his own research and get support, he writes research results in an article and submits the article to some scientific journal for presentation. An editor of the journal to which the article has been submitted determines whether it is worth being reviewed, and if he determines that it is worth, he forwards the article to several reviewers and asks the reviewers to review it. The reviewers examine if the article is worth being published in the journal, depending on the level of the journal, determine which of the following it corresponds to: the article can be published as it is (Accept); the article can be published after somewhat improved (Conditional Accept); or the article will be assessed again after it is improved and then rewritten and resubmitted (Reject), and additionally write their comments on the article.

"Cell," "Nature," "Science" are known as most prestigious scientific journals, a publication process is complicated in order for an article to get published in these journals, and a researcher has to pay a high manuscript submission fee. In addition, a reader has to pay a subscription fee in order to read articles.

The high manuscript submission fee is a burden to researchers working in disadvantaged circumstances, and therefore there are many researchers who have no chance to put their own research results out into the world or have to give up their researches without funds.

In addition, a conventional place where research presentation was made (conference, article) was mainly intended for academics not general public, and thus it was difficult for the general public interested in studies to easily know a researcher's research contents.

For academic journals in the field of natural science and social science, "Journal impact index: Impact Factor" which is an index that measures how much impact the journal has and how often the journal's articles are cited, is often used as a measure of evaluation of a researcher. However, the "Impact Factor" is, in principle, an evaluation index for "academic journals" based on the number of times "an average article" published in a particular academic journal, has been cited, which is calculated based on data recorded in a citation database "Web of Science" of Clarivate Analytics company, and thus it is not an evaluation index for the article published there or for a researcher who submitted the article. In addition, in recent years, "Altmetrics" as an evaluation index capable of being quantified at an "article level" or "researcher level" has been provided by a largest publishing company such as Elsevier.

However, if the "Impact Factor value" or "Altmetrics score" is used as a measure of evaluation of a researcher, publishing his article in an academic journal with a high "Impact Factor value" or "Altmetrics score" itself may become a research purpose by the researcher, which leads to the lack of objectivity of evaluating the researcher from many points of view.

### Summary of the Invention

### Problems to be solved by the Invention

The present invention therefore seeks to solve the above-mentioned problems by providing a research information management system that contributes to support activities for researchers such that research results of the researchers all over the world are fairly evaluated without being influenced by countries where they reside or economic circumstances and they can receive incentives accordingly.

### Means for solving the Problems

The present invention is characterized by a research information management system contributing to support activities for a researcher by access of a first terminal of the researcher, a second terminal of a research supporter, and a third terminal of a general participant to a server of a platform having the server and a database through a network, the platform comprising: a dashboard tool configured to analyze and process research information data to be submitted from the first terminal and store the data in the database as first data; an expert live tool configured to lively distribute a video to be distributed from the first terminal, to the third terminal as a distribution video, or store the video in the database as an edited video, and store in the database as second data, evaluation points transmitted through the third terminal as an evaluation of the distribution video or the edited video; and a credit rating tool configured to score and display a credit rating of the researcher using Artificial Intelligence (AI) based on the first data, the second data, and third data transmitted from the second terminal as research credit information of the researcher and stored in the database.

In addition, the present invention is characterized in that the platform further comprises an online study agora (online learning square) tool by which the researcher, the research supporter, and the general participant can gather together through the first terminal, the second terminal, and the third terminal on a communication line.

### Advantageous effects of the present invention

With the research information management system of the present invention, a researcher can have a chance to easily put his own research results out into the world.

In addition, the researcher can be given a fair credit rating with his research results fairly evaluated.

Furthermore, the researcher can receive an incentive or research offer from a supporter according to the credit rating.

### Brief Description of the Drawings

FIG. 1 is an explanatory diagram of an activity support scheme for a researcher by a research information management system of the present invention.
FIG. 2 is a schematic configuration diagram of the research information management system according to an embodiment of the present invention.
FIG. 3 is a diagram illustrating one example of a use mode of a dashboard function.
FIG. 4 is a diagram illustrating a procedure of viewing an article using an expert live tool function.
FIG. 5 is a diagram illustrating a procedure of viewing an online video or an edited video using the expert live tool function and the dashboard function.
FIG. 6 is a diagram illustrating a procedure of learning using an online study agora tool function.
FIG. 7 is a diagram illustrating modes of displaying "social tipping" on a terminal screen.

### Mode for carrying out the Invention

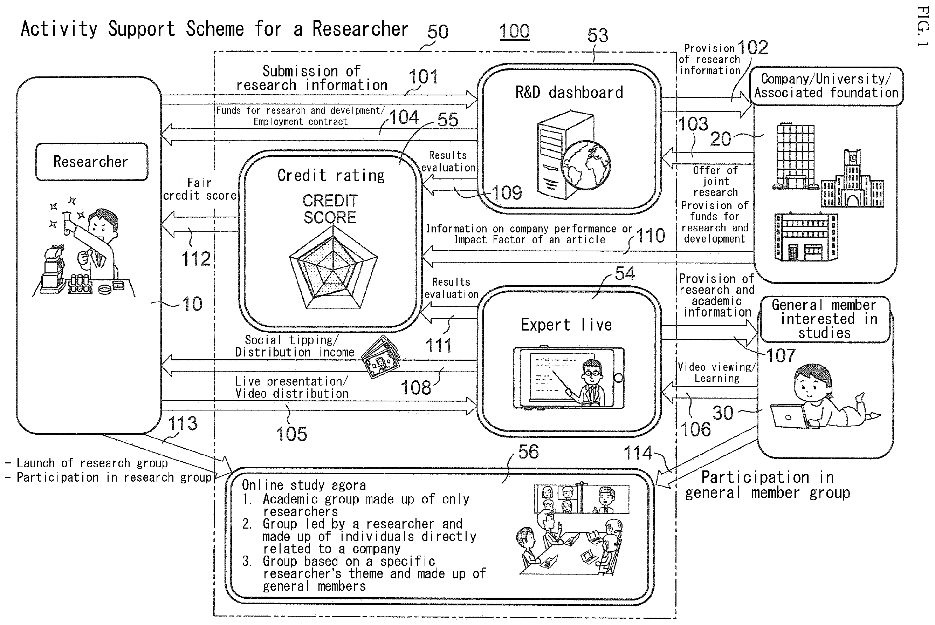

First, an activity support scheme for a researcher using a research information management system of the present invention is described with reference to FIG. 1.

A research information management system 100 includes a platform 50, which is provided with a dashboard tool 53 having a dashboard function, an expert live tool 54 that has a video distribution function, a credit rating tool 55 that scores a credit rating for a researcher based on predetermined information data to display, and an online study agora (online learning square) tool 56 that makes it possible to gather together and learn while having a conversation on a communication line.

How to provide support for activities of a researcher 10 using the respective tools 53, 54, 55, and 56 provided on the platform 50 is described below.

### <1. Support for an article submission activity of a researcher>

The researcher 10 writes his own research information in an article and submits his article to the platform 50 online (step 101). The dashboard tool 53 analyzes and processes entered research information data using Artificial Intelligence (AI) to thereby reconfigure the data as visualized dashboard information whose content can be recognized and grasped at first sight, and provides it to a research supporter 20 such as a company, university, or associated foundation online (step 102).

This dashboard information is once stored in a database (DB) in the platform, and is read when the dashboard tool 53 is accessed from the research supporter 20.

Reconfiguring the online submitted article from the researcher 10 into the dashboard information to provide it to the research supporter 20 as mentioned above, provides advantages for both the researcher 10 and the research supporter 20.

An advantage for the researcher 10 is that chances to submit articles can be increased without worrying about a publication fee and a publication procedure because in the online submission, an article publication fee is significantly low and a submission procedure is simplified compared to the conventional offline article submission associated with peer review.

An advantage for the research supporter 20 is that since a submitted article from the researcher 10 is first provided as visualized online dashboard information whose content can be recognized and grasped at first sight, the research supporter 20 can grasp a summary of the article quickly and then access the platform 50 to obtain the original text of the submitted article online if necessary, and evaluate the content of the article. Therefore, speeding up can be achieved without the conventional inconvenience that the research supporter never knows the content of an article until buying and reading the article published on a journal.

It is to be noted that the article, reconfigured into the dashboard information, submitted by the researcher can also be provided to general participants 30 through the expert live tool 54. The researcher 10 can not only submit an article but also enter various research information data into the dashboard tool.

It is to be noted that FIG. 1 illustrates flows of an offer of joint research or provision of funds for research and development (step 103), and funds for research and development or an employment contract (step 104) from the research supporter 20 to the researcher 10, however, the dashboard tool 53 does not get involved in these flows.

### <2. Support for a research presentation activity of a researcher>

Presentation of a researcher's research content has mainly been article presentation at a conference. A chance to give presentation is therefore limited, and a person who can know the research content is also limited to related persons who participated in the conference.

In the platform 50 of the present invention, the researcher 10 can widely distribute his research content and personal opinion as an online video or edited video to the general participants 30.

With this, the researcher 10 can sell himself to viewers. The researcher 10 summarizes his own research content into a distribution video using a smartphone or a dedicated terminal and distributes the video online to the expert live tool 54 (step 105).

The general member (general participant) 30 who is interested in studies, can receive provision of research and academic information (step 107) and learn the research content of the researcher 10 (step 106), by accessing the platform 50 to view a live video that is distributed from the expert live tool 54.

The lively distributed video is data-compressed, edited into an edited video, and stored in the database in the platform for future view. Subsequently, when the general participant 30 accesses the expert live tool 54, it is read from the database and distributed as an edited video.

A dashboardized submitted article can also be viewed through the expert live tool 54. It is possible for not only the general participant 30 but also the research supporter 20 or another researcher 10 to view the article, edited video, or live distribution video though the expert live tool 54.

The general participant 30, the research supporter 20 or the other researcher 10 who have viewed the live distribution video, edited video, or dashboardized submitted article, can give the researcher 10 their evaluation as evaluation points through the expert live tool 54, if the content is admirable. This evaluation point is generally referred to as "social tipping," which is an act to throw in a small amount of money with admiration to a person who does some performance.

The expert live tool 54 is mounted with a function capable of such "social tipping." The evaluation point, which is the "social tipping" thrown in the expert live tool 54 as a sign of admiration, is stored in the database and can subsequently be received in cash or in virtual currency by the researcher 10. The "social tipping" can be done both with points purchased beforehand from the expert live tool 54 and with the virtual currency. The earned evaluation points can be transferred as cash to a specified account on the basis of researcher or can be paid linked with a country-specific SNS virtual currency or telephone banking. The researcher 10 can see a parameter indicating a current amount of "social tipping" and thus can know outline of evaluation in addition to the number of video views.

In addition, the expert live tool 54 is provided with a multilingual automatic translation subtitle function. Words of the distributing researcher 10 can be speech-recognized, automatically translated, and displayed as subtitles.

Furthermore, the expert live tool 54 is provided with a video bookmarking function. The video bookmarking function is a frequently-used and convenient function with which the viewer can immediately call up the scene that he wants to see.

### <3. Support for making fair a credit rating of a researcher>

Although FICO in the U.S.A or Sesame Credit in China etc. is famous for scoring and displaying mainly social credibility of a general individual, a visualized and scored credit rating for a researcher is not known.

In the platform 50 of the present invention, a credit rating for the researcher 10 can be made by the credit rating tool 55 (hereinafter referred to as "Chemi Credit").

The "Chemi Credit" is to evaluate the researcher 10 as to how much he is connected to other researchers as a researcher, whether he has any joint research achievement with a company or university, an evaluation of his written article, and how much he contributes to society or education through this platform 50, from various aspects using Artificial Intelligence (AI), and to display the results (credit rating) as a credit score.

Using this score as a reference, the research supporter 20 such as a company, university, or foundation, can find a researcher 10 having a high credit rating, give him funds for research and development, and acquire him as a research collaborator. The higher the score, the more merits the researcher can obtain, and he can receive grants, get an award from a world authority, and obtain a preferential matching with a company or university.

In the "Chemi Credit," following three data (first data to third data) are used in order for the credit rating tool 55 to calculate a credit rating.

The first data is dashboard information that is stored in the database in the platform 50 (step 109).

The second data is evaluation points given as "social tipping" stored in the database by the expert live tool 54 (step 111).

The third data is information, such as company performance, Impact Factor value, or Altmetrics score, provided by the research supporter 20 as credit information on the researcher 10 (step 110).

A credit score thus calculated by the credit rating tool 55 based on the first to third data using Artificial Intelligence (AI) is displayed as a fair credit rating score, which can be obtained by the researcher 10 (step 112).

Furthermore, by referring to a researcher network (node) that is associated with researchers between them in a database 52, it is possible to add as fourth data, results from an evaluation of first data to third data of another researcher (direct node) who has a direct connection or conducts a joint research etc. and of further researcher (subnode) connecting to the direct node.

From these first data to fourth data, for the number of visitors to (viewers of) an article or video, of the general participants 30 or research supporters 20, the number of visits (views), each information on a researcher network, an Impact Factor value or Altmetrics score, and similar information, evaluation that makes an academic aspect and marketability fair may be made by Artificial Intelligence (AI) taking also multivariate analysis and panoramic view analysis into consideration.

### <4. Creation of an online study agora (online learning square) by researchers and general participants etc.>

The platform 50 of the present invention is provided with the online study agora (online learning square) 56 aimed at launch of a research group by the researchers 10 and participation of the researchers 10 in the research group (step 113), and at participation of the general participants 30 (step 114). At this online study agora 56, the researcher 10, the research supporter 20, and the general participant can gather together on a communication line to discuss and learn about various research themes.

The online study agora tool 56 is provided with a function for (a) an academic group made up of only researchers, (b) a group that is led by a researcher and made up of individuals related to a company, or (c) a group that is based on a specific researcher's theme and made up of general participants, etc. to discuss and learn about various research themes online.

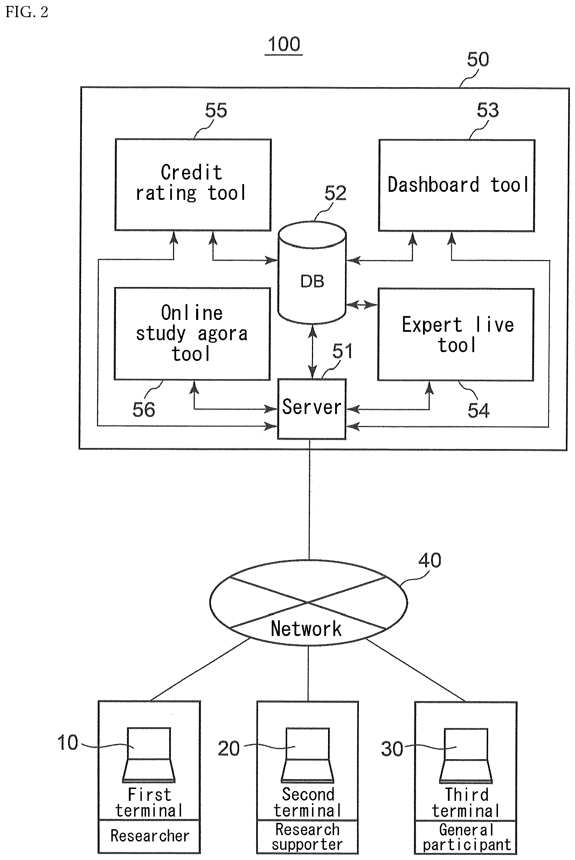

FIG. 2 is a schematic configuration diagram of the research information management system 100 according to one embodiment of the present invention.

The first terminal of the researcher 10, the second terminal of the research supporter 20, and the third terminal of the general participant 30 are accessibly connected to the platform 50 having a server 51 and the database (DB) 52 through a network 40. By accessing the server 51 of the platform 50 from the first to third terminals, the dashboard tool 53, the expert live tool 54, the credit rating tool 55, and the online study agora tool 56, provided on the platform 50, are driven, and calculation results are configured to be stored in the database 52 or transmitted to and received from the first to third terminals.

It is to be noted that although only one of the first to third terminals is displayed for the researcher, research supporter, and general participant, respectively, it goes without saying that one or more terminals are provided for a plurality of researchers, research supporters, and general participants, respectively.

The dashboard tool 53 has a function of analyzing and processing research information data (research article) that is submitted online from the first terminal 10, by AI, and storing it as first data in the database 52.

The expert live tool 54 has a function of lively distributing a video that is distributed from the first terminal 10, to the third terminal 30 as a distribution video, or storing the video in the database 52 as an edited video, and of storing in the database 52 as second data, evaluation points transmitted through the third terminal 30 as an evaluation of the distribution video or the edited video.

The credit rating tool 55 has a function of scoring and displaying a credit rating of the researcher by Artificial Intelligence (AI) based on the first data, the second data, and third data transmitted from the second terminal as research credit information of the researcher and stored in the database 52.

It is to be noted that the credit rating may be made adding the fourth data as mentioned above.

The online study agora tool 56 has a function for the researcher, research supporter, and general participant to gather together and learn online through the first terminal 10, the second terminal 20, and the third terminal 30.

It is to be noted that in order for the first to third terminals 10-30 to access the server 51, membership registration in which each acquires an account by a user ID and password and registers it on the database 52 is necessary.

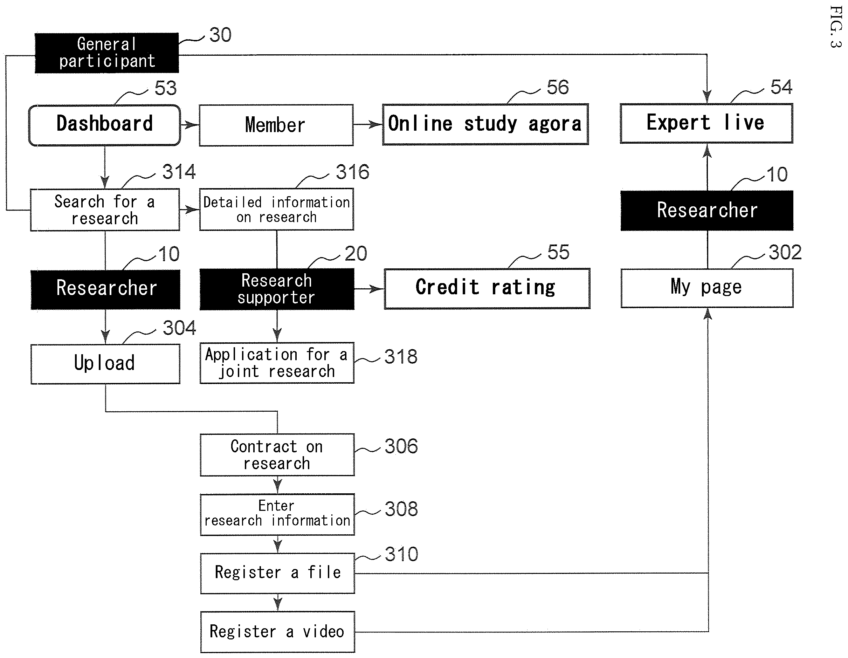

FIG. 3 is a diagram illustrating one example of how the researcher 10, the research supporter 20, and the general participant 30 make use of a dashboard function of the dashboard tool 53 provided on the platform 50.

Dashboard information created by the dashboard tool 53 is made use of by members such as the researcher 10, the research supporter 20, and the general participant 30 by the online study agora 56. In addition, the dashboard information is made use of by the general member 30 and the researcher 10 by the expert live 54.

The researcher 10 can upload 304 the dashboard information to my page 302 of his first terminal and distribute it by the expert live tool 54. In uploading 304, contract terms required for a contract on a joint research 306 with the research supporter 20, entry of concerned research information 308, registering of necessary files 310, and an edited video can be registered on my page 302.

The research supporter 20 can retrieve 314 research information from the dashboard 53, and make an application for a joint research 318 based on detailed information on the research 316 and a credit rating of the researcher acquired by accessing the credit rating 55.

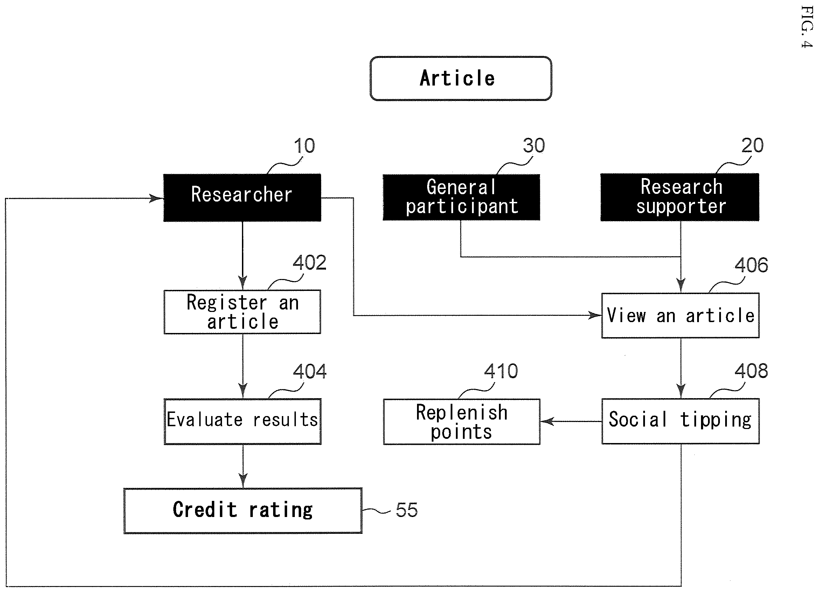

FIG. 4 illustrates a procedure in which the research supporter 20 and the general participant 30 view an article of the researcher 10 using the expert live tool 54 provided on the platform 50.

It is to be noted that the article to be viewed is pre-registered 402 in the dashboard 53, and research achievement of the researcher 10 is also evaluated 404 and credit-rated in the credit rating tool 55.

The research supporter 20, the general participant 30, and another researcher 10 can view 406 the article of the researcher 10 which article is distributed by the expert live tool 54, and give social tipping 408 if it is admirable. Points owned by the researcher are replenished 410 by this social tipping 408.

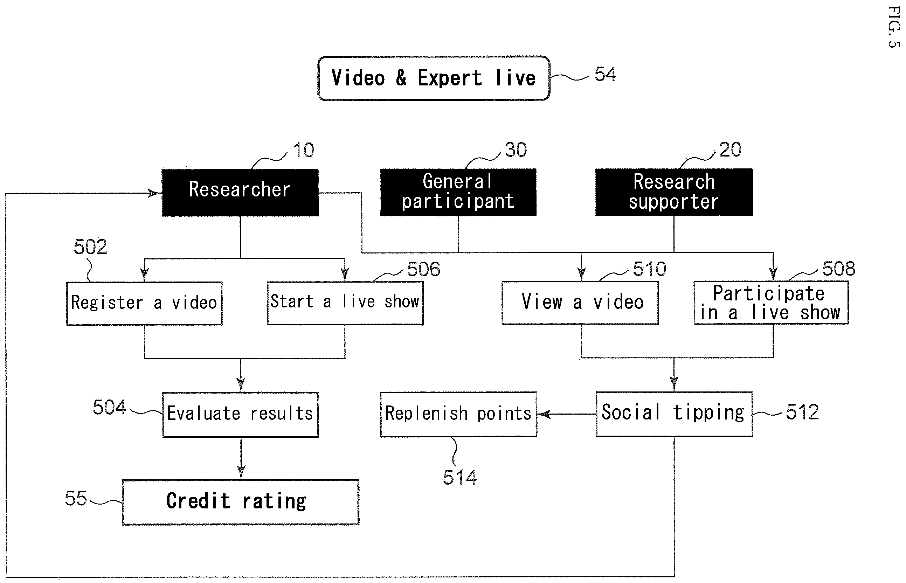

FIG. 5 illustrates a procedure in which the researcher 10, the research supporter 20, and the general participant 30 view an online video that is distributed by the researcher 10 or an edited video that is stored in the dashboard tool 53, using the expert live tool 54.

It is to be noted that the video to be viewed is pre-registered 502 in the expert live tool 54, and research achievement of the researcher 10 is also evaluated 504 and credit-rated in the credit rating tool 55.

When the researcher 10 starts 506 a live show, the research supporter 20, the general participant 30, and another researcher 10 that join 508 the live show, can view 510 a live video that is distributed by the expert live tool 54, and give social tipping 512 if it is admirable. Points owned by the researcher are replenished 514 by this social tipping 512.

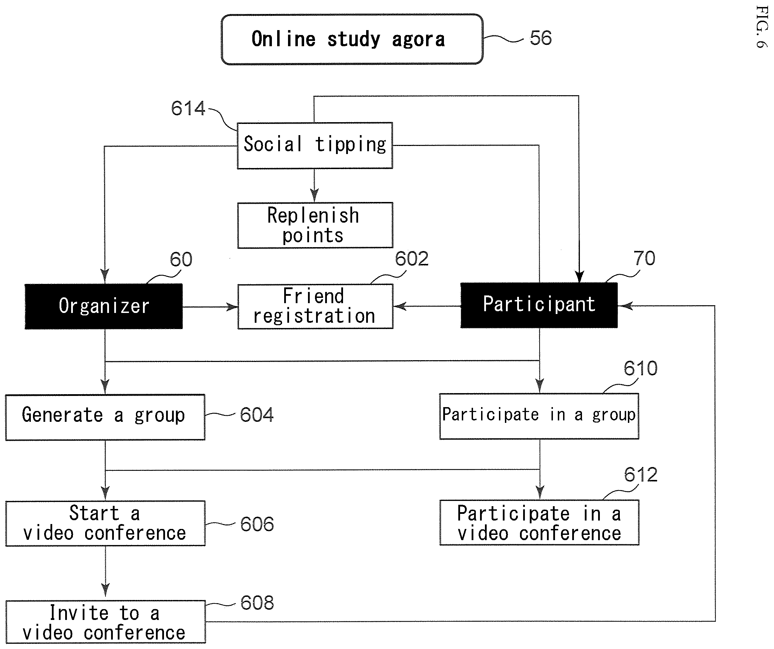

FIG. 6 illustrates a procedure in which an organizer 60 and participants 70 gather together and learn online using the online study agora tool 56.

Here, only the researcher 10 can be the organizer 60, and another researcher 10, the research supporter 20, or the general participant 30 can be the participant 70.

It is necessary for the organizer 60 and the participant 70 to make friend registration 602 to the online study agora tool 56 in advance.

The organizer 60 generates 604 a group for each research theme, starts 606 an online video conference, and invites 608 a prospective participant for each group to an online video conference. The participant 70 accepting the invitation, participates 610 in each group and then participates 612 in the online video conference.

If the participants in the online video conference determine that what a participant in the conference has said is admirable, they can give social tipping 614 to the participant. Points owned by the participant are replenished by this social tipping 614.

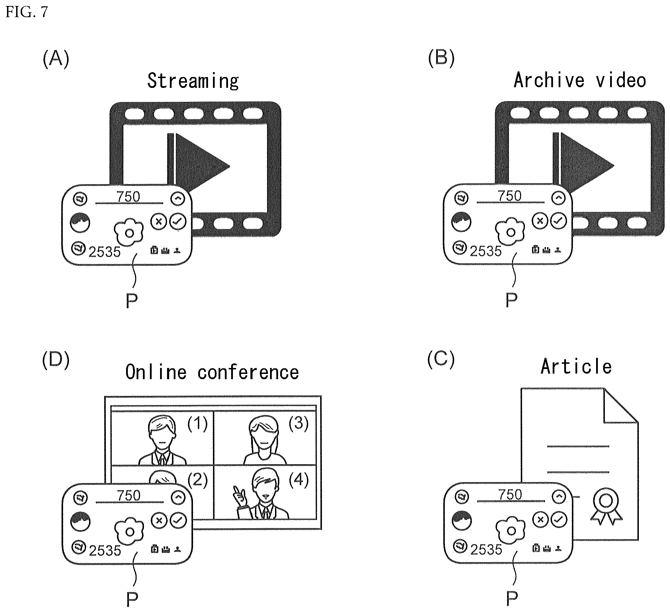

FIG. 7 is a diagram describing one example of how the "social tipping" is displayed on screens of the first terminal 10 to the third terminal 30.

If a researcher ID can be obtained, the "social tipping" can be done at any timing. Therefore, the "social tipping" occurs at four points: (A) at the time of streaming distribution; (B) at the time of archive video distribution; (C) at the time of article distribution; and (D) at the time of online conference. Upon occurrence of the "social tipping," the effect can be conveyed to the distributor using an API (Application Programming Interface). In addition, as illustrated in FIG. 7, a screen display P for displaying the number of points (e.g., 750 points) is also possible. Furthermore, in the case of the online conference (D), it is possible to specify a conference participant and give the "social tipping" to the specified participant on an individual basis.

The platform 50 also has a function of monitoring the registered researcher by AI.

The purposes of this monitoring are: (1) to provide an improved incentive for a superior member and impose a penalty on a bad member ; and (2) to acquire a member utilization trend and report a summary thereof to cooperative companies, universities, and foundations (research supporters) to encourage them to provide funds to a new research or popular research.

An AI preferential incentive system includes a preferential treatment such as raising an exchange rate incentive for a superior member, taking into consideration the number of article submissions, the number of visits, the number of research publications on the platform, or an Impact Factor value or Altmetrics score of the research by AI. In an AI penalty system, Al monitors contents put out in a video or on a bulletin board by a member, and if he often puts out contents against public policy, violent language or threatening contents, Al recommends or implements, as a penalty, reduction in preferential incentive or possibly suspension of his account.

As stated above, targeting researchers all over the world allows not only to improve dignity and humanity but also to eliminate discrimination.

## Claims

1. A research information management system contributing to support activities for a researcher by access of a first terminal of the researcher, a second terminal of a research supporter, and a third terminal of a general participant to a server of a platform having the server and a database through a network,
the platform comprising:
- a dashboard tool configured to analyze and process research information data to be submitted from the first terminal and store the data in the database as first data;
- an expert live tool configured to lively distribute a video to be distributed from the first terminal, to the third terminal as a distribution video, or store the video in the database as an edited video, and store in the database as second data, evaluation points transmitted through the third terminal as an evaluation of the distribution video or the edited video; and
- a credit rating tool configured to score and display a credit rating of the researcher using Artificial Intelligence (AI) based on the first data, the second data, and third data transmitted from the second terminal as research credit information of the researcher and stored in the database.

2. The research information management system according to claim 1, wherein the credit rating tool adds as fourth data results from an evaluation of the first data, the second data, and the third data on a plurality of other researchers connected to each other through the network to score and display a credit rating of the researcher.

3. The research information management system according to claim 1 or 2, wherein the platform further comprises an online study agora (online learning square) tool by which the researcher, the research supporter, and the general participant can gather together through the first terminal, the second terminal, and the third terminal on a communication line.
